# EUROPEAN PATENT SPECIFICATION

(11) **EP 3 607 027 B1**
(45) Date of publication and mention of the grant of the patent: **20.01.2021**
(21) Application number: 18714282.3
(22) Date of filing: 05.04.2018
(51) Int. Cl.: C10G 3/00, C10G 45/58, B01J 21/18, B01J 23/755, B01J 23/883, B01J 23/888, B01J 23/00, B01J 27/051, B01J 37/00, B01J 37/03, B01J 37/20, B01J 23/889

(54) **HYDROTREATMENT OF FEEDSTOCK FROM RENEWABLE SOURCES USING CATALYSTS WITH A HIGH CONTENT OF ACTIVE PHASE**
HYDROBEHANDLUNG VON ROHMATERIALIEN AUS ERNEUERBAREN QUELLEN UNTER VERWENDUNG VON KATALYSATOREN MIT HOHEM GEHALT EINER AKTIVEN PHASE
HYDROTRAITEMENT DE CHARGE PROVENANT DE SOURCES RENOUVELABLES À L'AIDE DE CATALYSEURS À HAUTE TENEUR EN PHASE ACTIVE

(30) Priority: 06.04.2017 IT 201700037970
(43) Date of publication of application: 12.02.2020
(73) Proprietor: ENI S.p.A., 00144 Rome (IT)
(72) Inventor: CALEMMA, Vincenzo, I-20097 SAN DONATO MILANESE (IT); CARATI, Angela, I-20098 SAN GIULIANO MILANESE (IT); FERRARI, Marco Massimo, I-20148 MILANO (IT)
(74) Representative: Cernuzzi, Daniele
(86) International application number: PCT/EP2018/058677
(87) International publication number: WO 2018/185200

(56) References cited:
- US-A1- 2013 072 730
- US-A1- 2013 178 650
- US-A1- 2014 323 291
- JUAN ANTONIO MELERO ET AL: "Biomass as renewable feedstock in standard refinery units. Feasibility, opportunities and challenges", ENERGY & ENVIRONMENTAL SCIENCE, vol. 5, no. 6, 1 January 2012 (2012-01-01) , page 7393, XP055046864, ISSN: 1754-5692, DOI: 10.1039/c2ee21231e

## Description

### Field of the invention

The present invention relates to a process for obtaining hydrocarbons by the hydrotreatment of feedstocks from renewable sources, comprising mixtures of fatty acid esters and/or free fatty acids of biological origin, where said hydrocarbons may be used as fuels or components of fuels, in particular diesel fuels.

### Prior art

The constant rise in the consumption of fuels, in particular motor diesel, and the ever-increasing awareness of the environment, seen against a background of ever more stringent international standards on emissions of pollutants and greenhouse gases, ensure that processes allowing fuels to be obtained from renewable sources, so-called biofuels, will become more and more important.

In particular, on accepting the Kyoto Protocol, the European Union issued a series of directives, known as the 20/20/20 package, which set the objective of reducing global warming caused by human activity.

In the context of the transport sector, the RED Directive (Renewable Energy Directive) 2009/28/EC, as amended, requires the addition of bio-components to fossil fuels in increasing proportions, to reach 10% of the total composition by the year 2020.

The Fuel Quality Directive, adopted in 2012, confirmed the objective of producing 10% of energy from biofuels, moreover allowing biofuels produced from second-generation renewable sources to be double-counted provided they do not compete with the food chain (used cooking oils, animal fats, tall oil, etc.). Finally, an amendment of the RED Directive, called the ILUC Directive, set a limit of 7% on biofuels derived from food crops, encouraging the use of "advanced" biofuels (those deriving from municipal waste, algae, waste effluent containing raw glycerol, ligno-cellulosic biomasses, etc.), which must make up at least 0.5% by 2020.

The need to produce fuels from renewable sources in order to comply with the above-mentioned European directives has resulted in the development of processes for obtaining biofuel components that utilize as their raw feedstock products of biological origin derived from the conversion of ligno-cellulosic vegetable biomass or from the production of oils and fats of animal or vegetable origin, or mixtures of said products, containing triglycerides and/or free fatty acids, which may be used as such or after pre-treatment.

A possible way of converting these products into components of biofuels comprises the transesterification of triglycerides with a short-chain alcohol in the presence of a catalyst. When the alcohol used in the transesterification reaction is methanol, fatty acid methyl esters (FAME) are obtained. FAME have various characteristics that make them suitable as a diesel component. These include:
- a similar cetane number to that generally present in diesel from fossil fuels;
- a distillation range that falls within the heavy fraction of the diesel cut;
- a high flash point;
- the complete absence of sulfided compounds and aromatic compounds;
- the effect of improving the lubricity of low-sulfur fossil-fuel diesel.

By contrast, because of its chemical composition, biodiesel containing FAME has certain disadvantages related to a lower oxidation stability, due to the presence of double bonds on the hydrocarbon chain of these products, and to degradation processes caused by bacterial growth. In particular, the double bonds on the hydrocarbon chain will, in the presence of molecular oxygen, cause the formation of hydroperoxides, which in turn may, in particular in the presence of transition metals, as a result of free-radical reactions, lead to the formation of gums and other insoluble compounds that may clog the filters and accumulate on other parts of the engine. Moreover, adding FAME to the diesel exacerbates its behaviour in the cold and increases NOₓ emissions on combustion. The main problems associated with the use of FAME-based biodiesel are described in the Concawe report no. 9/09, "Guidelines for handling and blending FAME", from November 2009.

In addition, there is a disadvantage linked with the process of producing biodiesel based on FAME, in that large quantities of glycerol are obtained as a by-product, around 10% by weight in relation to the weight of FAME obtained, and the market for this is now generally considered to be mature.

An alternative process for producing biofuels from renewable sources makes use of the catalytic hydrotreatment of vegetable oils (for example palm oil, soya oil, rapeseed oil, corn oil, sunflower oil, etc.) to obtain so-called HVO (hydrotreated vegetable oils). HVO comprise a mixture of linear paraffins and isoparaffins with no aromatic or polynuclear aromatic hydrocarbons (PAH), oxygen or sulfur, characterized by a high cetane number. The reaction process results in hydrocarbon mixtures with a boiling point range typical of the diesel cut, together with a small percentage of naphtha and propane. The diesel cut from HVO (so-called "green diesel") has significantly better characteristics than FAME, in particular as regards better oxidation stability and better characteristics in the cold (Faraci, G., Gosling, C., Holmgren, J., Marinangeli, R., Marker, T., Perego, C., in: New developments in renewable fuels offer more choices, Hydrocarbon Processing, September 2007 issue, pp. 67-71), and the cetane number, which is particularly high (>70), to the extent that it may be considered a "cetane booster". Similarly to FAME, HVO contain no sulfided or aromatic compounds. Moreover, the use of HVO as a diesel biocomponent results in a significant reduction in hydrocarbon and CO emissions, with NOₓ and particulate emissions unchanged (T. N. Kalnes, M.M. McCall, D.R. Shonnard in: Thermochemical conversion of biomass to liquid fuels and chemicals, RSC Publishing (2010), chapter 18, p. 468).

At present, the catalytic hydrotreatment of feedstocks from renewable sources to obtain biofuels is performed not only on the basis of vegetable oils such as palm oil, soya oil, etc. but also from other sources, such as fish oil and algae oil, animal fats (such as tallow, lard, etc.), residual oils and fats from the food industry and from catering, and lipids obtained from the fermentation of oily microorganisms (such as yeasts, microalgae, etc.). Hydrotreatment of these complex mixtures with hydrogen, which is commonly performed in the presence of a supported metal catalyst, allows a mixture of paraffins that may advantageously be used as motor fuels to be obtained.

In the case of feedstocks comprising triglycerides, oxygenated groups are removed substantially by two procedures:
- hydro-deoxygenation, in which the oxygen in the triglyceride molecule is removed, giving water, at the same time as formation of a linear paraffin with the same number of carbon atoms as the fatty acid in the starting triglyceride;
- decarbonylation/decarboxylation (DCO/DCO₂), in which oxygen is removed by forming CO and CO₂, at the same time as formation of a paraffin with one carbon atom less than the fatty acid in the starting triglyceride.

The latter reaction differs from thermal decarboxylation, since it may also be carried out at temperatures at which thermal decarboxylation takes place at a limited conversion rate.

The reactions involved in the two above-mentioned procedures for converting triglycerides are performed in the presence of specific catalysts and are represented in the diagram below, in which 2X represents the reduction in the number of hydrogen atoms correlated to any double bonds present in the hydrocarbon chain of the fatty acid:
1. hydro-deoxygenation:

   C₅₁H₉₈-_{2X}O₆ + (12+X) H₂ → 3 C₁₆H₃₄ + C₃H₈ + 6 H₂O
2. decarbonylation (DCO)

   C₅₁H_{98-2X}O₆ + (6+X) H₂ → 3 C₁₅H₃₂ + C₃H₈ + 3 CO + 3 H₂O
3. decarboxylation (DCO₂)

   C₅₁H_{98-2X}O₆ + (3+X) H₂ → 3 C₁₅H₃₂ + C₃H₈ + 3 CO₂

On the basis of the above, two observations may be made:
- in each case, the glycerol part is converted to propane;
- the hydro-deoxygenation reaction consumes a larger quantity of hydrogen than the decarboxylation/decarbonylation reactions.

It should be noted that the use of palladium-based catalysts on a carbon support may have an effect on the selectivity of the hydrotreatment towards decarboxylation, as described for example by I. Kubičková, M. Snare, K. Eränen, P. Mäki-Arvela, D. Y. Murzin in: Hydrocarbons for diesel fuel via decarboxylation of vegetable oils (2005), Catalysis Today, vol. 106, pp. 197-200.

Each of the procedures described above has advantages and disadvantages: in particular, catalytic hydro-deoxygenation is characterized by a greater consumption of hydrogen, linked to the formation of water, which in turn may contribute to deactivating some conventional hydrotreatment catalysts, such as NiMo or CoMo catalysts (C. Kordulis, K. Bourikas, M. Gousi, E. Kordouli, A. Lycourghiotis: Development of nickel based catalysts for the transformation of natural triglycerides and related compounds into green diesel: a critical review (2016), Applied Catalysis B Environ., vol. 181, pp. 156-196). Moreover, in some operating conditions, water may promote the occurrence of corrosion phenomena in some parts of the hydrotreatment plant.

On the other hand, the catalytic decarbonylation/decarboxylation brings about a fall in yield, because one carbon atom (in the form of CO and CO₂) is lost for each mole of paraffin. Carbon monoxide (CO) is a known inhibitor of conventional hydrotreatment catalysts based on noble metals, and the carbon oxides are produced by the decarbonylation/decarboxylation mechanism may, in specific conditions, in turn react with hydrogen (in a methanation process) to give methane and water, which may in its turn account for a negative effect on the catalysts, as indicated above. Furthermore, the reaction between water and CO₂ results in the formation of carbonic acid, which may give rise to the corrosion of metals in the plant.

It should be noted that the relative quantity of CO and CO₂ in the hydrotreatment rector may vary depending on the operating conditions, as a result of the so-called water gas shift reaction (WGS reaction):

CO + H₂O ⇆CO₂ + H₂

Linear or substantially linear paraffins that are obtained from the above-mentioned reactions may then undergo a catalytic hydroisomerization step intended to cause the hydrocarbon molecule to branch and to obtain biofuels having better cold properties. The term "substantially linear paraffins" should be understood to mean a paraffin composition comprising at least 90% by weight of linear paraffins.

The prior art describes numerous examples of catalytic hydrotreatment processes of mixtures of fats and oils from renewable sources.

For example, WO 2011/012439 describes a process for producing bio-naphtha and optionally bio-propane from a complex mixture of naturally occurring fats and oils, which includes a refining treatment for removing the major part of different components of triglycerides and fatty acids, followed alternatively either by hydro-deoxygenation of the refined fats and oils to obtain substantially linear paraffins, or by obtaining said refined fats and oils from the corresponding fatty acids, which are converted into substantially linear paraffins by hydro-deoxygenation or decarbonylation/decarboxylation, or by obtaining said refined fats and oils from the corresponding saponified fatty acids, which are converted by decarboxylation into substantially linear paraffins.

The reactions of hydro-deoxygenation and decarbonylation/decarboxylation of the refined fats and oils, or the fatty acids derived therefrom, are carried out with hydrogen in the presence of various types of solid catalysts. According to WO 2011/012439, decarbonylation/decarboxylation of the fatty acids may be carried out using solid catalysts formed by group VIII metals (Ni, Pt and Pd) and group IB metals (Cu and Ag), supported on carbon, magnesium oxide, zinc oxide, the spinel minerals (Mg₂Al₂O₄, ZnAl₂O₄), perovskites (BaTiO₃, ZnTiO₃) calcium silicates (for example xonotlite), alumina, silica, or silica-alumina, preferably in the presence of hydrogen (at pressures between 0.01 and 10 MPa and in a ratio with the feedstock in the range of 0-2000 NL/L), to stabilize the catalytic activity, removing the unsaturated compounds that adhere to the surface of the catalyst.

Also, WO 2009/039347 A1 describes a process for producing a diesel fuel from renewable sources by hydro-deoxygenation carried out with hydrogen in the presence of catalysts based on nickel or nickel/molybdenum dispersed on a support having a large surface area; the above-mentioned process furthermore comprises an isomerization step in the presence of a catalyst based on a metal in group VIII of the Periodic Table, for example platinum, palladium or mixtures thereof, and an amorphous or crystalline support material. The support materials used comprise for example amorphous alumina, amorphous silica-alumina, ferrierite, AIPO-31, SAPO-11, SAPO-31, SAPO-37, SAPO-41, SM-3, MgAPSO-31, FU-9, NU-10, NU-23, ZSM-12, ZSM-22, ZSM-23, ZSM-35, ZSM-48, ZSM-50, etc. Similarly, EP 1 396 531 describes a process for producing a hydrocarbon component of biological origin, comprising a hydro-deoxygenation step and an isomerization step which are optionally preceded by a preliminary hydrotreatment (pre-hydrogenation) of biological material containing fatty acids and/or fatty acid esters. In the first step, hydro-deoxygenation, catalysts containing metals from group VIII and/or VIB of the Periodic Table are used, preferably catalysts based on Pd, Pt, Ni, NiMo or CoMo supported on alumina and/or silica. Likewise, in the pre-hydrogenation step a catalyst selected from Pd, Pt, Ni, NiMo and CoMo supported on alumina and/or silica is used. In the second step, isomerization, catalysts containing molecular sieves and/or group 10 metals and/or a support may be used. Typical catalysts for isomerization are for example Pt/SAPO-11/Al₂O₃, Pt/ZSM-22/Al₂O₃, Pt/ZSM-23/Al₂O₃ and Pt/SAPO-11/SiO₂.

US 2010/0240942 describes a process for the hydro-deoxygenation of feedstocks derived from renewable sources that is carried out at a temperature between 120°C and 450°C at a pressure in the range from 1-10 MPa, at a space velocity in the range from 0.1-10h⁻¹, in the presence of hydrogen in a ratio with the feedstock of between 50 Nm³ H₂/m³ of feedstock and 3000 Nm³ H₂/m³ of feedstock and of a catalyst in which the atomic ratio of group VIII metals to group VIB metals in the active phase is kept strictly at greater than 0 and less than 0.095. In the conditions described, the process of US 2010/0240942 favours the mechanism of catalytic hydro-deoxygenation, while the conversion of the feedstock by decarbonylation/decarboxylation is limited to below 10%, thus lessening the disadvantages caused by the formation of carbon oxides.

In US 2010/0240942, the possibility of using a bulk catalyst is further introduced.

WO 2012/030215 describes a process comprising one or more steps of hydrotreatment of vegetable biomasses in an aqueous medium in the presence of a catalyst that comprises at least 35% by weight of a metal oxide, a mixed metal oxide or a mixed metal/nonmetal oxide in relation to the total weight of the catalyst, with hydrogen at a pressure between 10 and 400 bar and a temperature between 50°C and 300°C in the first step and between 50°C and 450°C in subsequent steps.

The catalyst described in WO 2012/030215 likewise comprises Ni, at up to 80% by weight in relation to the total weight of the catalyst, and in the mixed forms it may contain at least one other element selected from the elements in groups VIB, VIII, IB and IIIA. In particular, catalysts based on mixed metal oxides or mixed metal/nonmetal oxides may comprise, in addition to Ni, at least one element selected from Mo, W, Fe, Co, Pd, Cu, B, Al, Ga, In and TI, and preferably comprise Ni and Cu and/or Co. Moreover, the above-mentioned catalysts may contain up to 35% by weight of stabilizers selected from the group comprising Al₂O₃, SiO₂, ZrO₂, CeO₂, TiO₂, Cr₂O₃, MoO₂, WO₂, V₂O₅, MnO₂, La₂O₃ and mixtures thereof.

Use of the catalysts described in WO 2012/030215 in the process of hydrotreatment of vegetable biomasses favours the hydro-deoxygenation of the vegetable oils and fats to the detriment of polymerization of the components of the above-mentioned biomasses, and reduces methanation of the carbon oxides, which, as already mentioned, contributes to the consumption of hydrogen.

International patent application WO 2013/148910 describes a process for the hydrotreatment of a feedstock of biological origin, possibly comprising a fraction of mineral origin, in the presence of hydrogen and a bulk catalyst based on mixed oxides comprising at least one metal from group VIB and at least one metal from group VIII of the Periodic Table, to form a fraction from which at least 75% of the oxygen has been removed. The above-mentioned process can provide, in addition to the step of hydrotreatment with a bulk catalyst, a further step of hydrotreatment with conventional supported metal catalysts in order to remove any residual content of sulfur, nitrogen and oxygen. The bulk catalyst bed, which has a marked selectivity towards the deoxygenation reaction by comparison with the desulfurization reaction, is advantageously placed upstream of the bed of conventional hydrotreatment catalysts, in order to reduce the heat in the reaction, better controlling temperature increase due to the hydro-deoxygenation reaction. In an embodiment described in WO 2013/148910, the effluent from the reactor containing the bulk catalyst bed undergoes the separation of water and carbon oxide before it is fed to the second reactor containing the supported hydrodesulfurization catalyst, in order to guarantee the activity thereof and in this way to improve the overall efficiency of the process.

WO 2013/148910 states that the use of bulk hydro-deoxygenation catalysts gives rise to lower hydrogen consumption per unit bio-feedstock, in conditions of total conversion (or 100% deoxygenation).

WO 2013/086453 also describes a process for the catalytic hydrotreatment of a feedstock comprising renewable material consisting substantially of triglycerides, in the presence of at least one self-supported and/or supported catalyst, in which said catalyst comprises at least one metal from group VIB, selected from Mo and W, at least one metal from group VIII, selected from Co and Ni, and a promoter selected from the group of hydroxy dicarboxylic acids, and in which the conditions are selected from the following:
- a temperature of at least 230°C, to obtain at least 50% conversion of the triglycerides;
- a temperature of at least 230°C and a relative pressure of between 0.35 and 20.7 MPa, to obtain an effluent including n-paraffins in a concentration of at least 30% by weight;
- a temperature of between 150°C and 290°C and a relative pressure of between 0.35 and 20.7 MPa, to obtain an effluent including long-chain primary alcohols (fatty alcohols) in a concentration of at least 5% by weight;
- a temperature of between 150°C and 290°C and a relative pressure of between 0.35 and 20.7 MPa, to obtain an effluent including aliphatic fatty acid monoesters in a concentration of at least 5% by weight.

In particular, WO 2013/086453 discloses the use of the self-supported catalyst, allowing up to 90% conversion of the triglycerides into the above-mentioned desired products, reducing the consumption of hydrogen.

However, the technical solutions of the prior art are not free of disadvantages.

Generally speaking, the reaction of deoxygenation by hydrotreatment of fatty acid esters and/or free fatty acids is characterized by a high consumption of hydrogen and a large quantity of evolved heat. In particular, in order to keep the temperature of the catalyst bed under control to avoid run-away phenomena and to reduce undesirable reactions such as cracking, polymerization, ketonization, cyclization and aromatization of the substrates, the hydrotreatment step is in general performed by feeding the feedstock in an appropriately diluted form, for example in a concentration of less than 30%, preferably between 20% and 30% by weight in relation to the weight of the entire feedstock, in a hydrocarbon or a hydrocarbon mixture (the "diluent feedstock"); in industrial practice, the above-mentioned dilution of the feedstock is generally obtained by recycling part of the liquid fraction of the reaction effluent containing the linear paraffins back to this step. Controlling the temperature of the process makes it possible to reduce the formation of degradation products that may accumulate on the surface of the catalyst or occlude the pores thereof, thus causing its deactivation. Although this represents a simple and economical solution to the problem of controlling temperature, in some cases it may be necessary to recycle the reaction effluent in amounts of greater than 80% by weight in relation to the weight of the total feedstock coming into this step, as described for example in European patent EP 1 741 768. This represents a clear limit to full exploitation of the production capacity of the plant.

The Applicant has thus set itself the target of identifying a new process for deoxygenating mixtures containing fatty acids and/or fatty acid esters of biological origin that is characterized by reduced consumption of hydrogen and that may be performed on an industrial scale with a greater yield than the processes that are described in the prior art. Moreover, the Applicant has set itself the target of identifying a deoxygenation process that is characterized by less evolution of heat, such that the quantity of "diluent feedstock" to be added to the initial feedstock from renewable sources, and/or the proportion of reaction effluent that is recycled, can be reduced - both these having the objective of diluting the said initial feedstock from renewable sources and controlling the temperature of the process.

Moreover, the Applicant has set itself the target of identifying a process for deoxygenating said mixtures containing fatty acids and/or fatty acid esters of biological origin which uses a catalytic material whereof the catalytic activity is high even at lower temperatures than those used in processes of the prior art. US 2013/178650 discloses a process for hydrotreatment of renewable feed.

### Summary of the invention

The present invention is defined in the appended claims and relates to a process for deoxygenating a feedstock from renewable sources containing fatty acid esters and/or free fatty acids of biological origin by hydrotreatment in the presence of a metal catalyst, preferably sulfided, having a high content of active phase, where said metal catalyst contains Ni, Mo, W, Al, optionally at least one metal Me selected from the group comprising Zn, Cd, Mn, Cu and mixtures thereof and is preferably characterized in that it comprises an amorphous phase and a pseudo-crystalline phase isostructural with wolframite.

The process of the present invention is characterized in that the deoxygenation is performed with a high selectivity towards the mechanism of decarbonylation/decarboxylation of the free fatty acids and/or their esters in relation to the mechanism of hydro-deoxygenation with the formation of water. This results in less consumption of hydrogen, with clear economic advantages, and allows the heat evolved in the reaction to be reduced, and consequently the dilution of the initial feedstock and/or the proportion of product recycled to the head of the reactor to be reduced - both these having the objective of controlling the reaction temperature.

Consequently, the process of the present invention allows productivity of the plant to be increased and the formation of undesirable products that affect the lifetime of the hydrotreatment catalyst to be reduced.

Moreover, the bulk catalytic material used in the process of the present invention is characterized by high catalytic activity even at temperatures lower than in the processes of the prior art, and this allows said catalytic material to be used for significantly longer periods.

The paraffins obtained by the process of the present invention have a boiling point within the range of distillation temperatures of hydrocarbons that are typically used in diesel fuels, and may be used as diesel biofuels or indeed as a bio-component for fossil fuels.

In order to improve their characteristics in the cold (for example the cloud point, CP, and the cold filter plugging point, CFPP), such linear or substantially linear paraffins obtained by the process of the present invention may undergo a subsequent hydrotreatment step in the presence of an isomerization catalyst (hydroisomerization step) in order to be at least partly converted into branched paraffins, substantially without cracking of the alkyl chains. The mixture of branched paraffins obtained in this way may also be used as a diesel biofuel or indeed as a bio-component for fossil fuels with high performance even at low temperatures.

Further features and advantages of the present invention will become clear from the detailed description below.

For the purposes of the present description and the claims below, the definitions of the numerical ranges are always inclusive unless otherwise specified.

For the purposes of the present description and the claims below, percentages are always by weight except for cases where otherwise specified.

In the description of the embodiments of the present invention, the use of the terms "comprising" and "containing" indicates that the options described, for example in respect of the phases of a process or the components of a product or device, are not necessarily exhaustive. However, it should be noted that the present application also includes as subject matter embodiments in which the term "comprises", referring to the options described, for example in respect of the phases of a process or the components of a product or device, must be interpreted as "consists substantially of" or "consists of", even where this is not explicitly stated.

For the purposes of the present description and the claims below, for the chemical elements and the groups to which they belong reference is made to the Periodic Table of the elements appearing in the CRC Handbook of Chemistry and Physics (58th edition, 1977-1978), using the CAS (Chemical Abstract Service) numbering system. For the purposes of the present invention, reference to a group in the Periodic Table includes any element in said group, with the exception of the transuranic elements.

For the purposes of the present description and the claims below, the term feedstock "from renewable sources" should be understood to mean a feedstock not obtained from fossil sources such as crude oil, coal, natural gas, tar sands, etc., but from fats and/or oils of biological origin, derived from animals, vegetables, algae and microorganisms. The feedstock from renewable sources includes a mixture containing fatty acid esters and/or free fatty acids of biological origin which take the form of a mixture of fatty acid triglycerides that in turn include fatty acid monoglycerides and diglycerides. Said fatty acids are characterized by linear or substantially linear hydrocarbon chains having numbers of carbon atoms that are generally even and between 8 and 24. Depending on their derivation, said hydrocarbon chains may be saturated or unsaturated, with the latter having one or more double bonds on the chain.

Representative but not restrictive examples of feedstocks from renewable sources are selected from the oils of sunflower, canola, coconut, palm, peanut, rapeseed, soybean, cannabis, olives, linseed, mustard, castor oil, oils derived from conifers (tall oil), oils extracted from algae and oily microorganisms (such as yeasts), oils and fats recycled from the food industry (such as used cooking oil, UCO) and those of animal origin, such as bacon fat, lard, tallow, dairy fats, etc., and mixtures thereof.

Feedstocks from renewable sources used in the process of the present invention may contain impurities (for example trace metals, phosphatides, etc.) which generally result in a drop in catalytic activity. Usually, this drop is compensated by progressively increasing the operating temperature of the hydrotreatment reactor from an initial temperature or start of run temperature (T_{SOR}) to a final temperature or end of run temperature (T_{EOR}), where as explained T_{EOR} > T_{SOR}.

In some cases, in order to protect the life of the catalytic material and to prevent the formation of by-products which are in any case undesirable, it may be necessary for said feedstocks from renewable sources to undergo specific pre-treatments for degumming, deodorization, etc. Some examples, which are not restrictive, of pre-treatment are hydrotreatment, steam stripping, extraction using solvents, distillation, etc.

For the purposes of the present description and the claims below, the term "bulk catalyst" or "bulk catalytic material" should be understood as an unsupported or self-supported catalyst, by which it is meant that the composition of the catalyst does not provide for a pre-formed support loaded with metals by impregnation or deposition. Bulk catalysts used in the hydrotreatment processes may be formed by one or more metals and do not comprise supports or carrier substrates. Typically, bulk catalysts do not provide for the presence of a binder in the final composition of the catalyst; however, this does not exclude the possibility that the compositions described or given by way of example here may include components other than catalytically active ones, such as binders, promoters or additives, generally totalling a quantity less than or equal to 50% by weight in relation to the total weight of the catalyst. In particular, when at least one binder is used, for example to improve the physical and/or thermal properties of the catalyst, said binder favours aggregation of the bulk catalyst particles, preferably without modifying the morphology thereof.

Catalysts of this type and the preparation thereof are described for example in the patents US 4,596,785, US 4,820,677, US 6,299,760, US 6,635,599 and the applications US 2007/0286781 and EP 1 941 944 A1.

For the purposes of the present description and the claims below, the terms "diesel fraction" or indeed "diesel cut" should be understood to mean a mixture of hydrocarbons having a total number of carbon atoms between 9 and 22 and a boiling range between approximately 180°C and approximately 360°C. The boiling range extends from the boiling point of 10% by volume of the mixture of hydrocarbons and the boiling point of 99.5% by volume of said mixture inclusive, as measured for example by ASTM D2887-16a.

### Detailed description of the invention

The present invention relates to a process as defined in the appended claims for deoxygenating a feedstock from renewable sources containing a mixture of fatty acid esters and/or free fatty acids of biological origin by hydrotreatment, which comprises reacting said feedstock in at least one reaction zone with hydrogen in the presence of a catalytic material whereof the active phase comprises at least one mixed oxide of Ni, Mo, W, Al, optionally at least one metal Me selected from the group comprising Zn, Cd, Mn, Cu and a mixture thereof, giving a reaction product comprising a liquid fraction and a gaseous fraction, wherein the liquid fraction comprises a mixture of linear or substantially linear paraffins.

Preferably said mixed oxide is characterized in that it comprises an amorphous phase and a pseudo-crystalline phase isostructural with wolframite,

The mixture of substantially linear paraffins obtainable by the above-mentioned process may advantageously be used as the hydrocarbon component of a diesel biofuel.

In a preferred aspect of the invention, the total quantity of the metals (Ni+Mo+W), calculated as oxides, in the mixed oxide of the active phase of the above-mentioned catalytic material is between 40% and 98% by weight in relation to the total weight of the active phase itself.

More preferably, said total quantity of (Ni+Mo+W) is between 70% and 90% by weight. According to another preferred embodiment of the present invention, said total quantity of (Ni+Mo+W) is between 42% and 85% by weight in relation to the total weight of the active phase itself.

Moreover, in a further preferred aspect of the invention, the total quantity of metals (Ni+W), calculated as oxides, in the mixed oxide of the active phase of the above-mentioned catalytic material is between 28% and 84% by weight in relation to the total weight of the active phase. More preferably, said total quantity of (Ni+W) is between 30% and 64% by weight.

According to a different embodiment of the present invention, said total quantity of (Ni+W) is between 28% and 64% by weight in relation to the total weight of the active phase itself. Moreover, in a further preferred aspect of the invention, the molar ratio between Mo and Win the mixed oxide of the active phase of the above-mentioned catalytic material is between 0.90 and 1.10. More preferably, said molar ratio Mo/W is between 0.95 and 1.05. Moreover, in a particularly preferred aspect of the invention, the active phase of said catalytic material comprises at least one mixed oxide having the following formula (I):

Mea Nib Moc Wd Ale O_{f} · pC (I),

where:
- Me is selected from the group comprising Zn, Cd, Mn, Cu and a mixture thereof,
- C is an organic component, or a residue obtained by partial calcination of said organic component, resulting from a polymeric organic compound selected from the group comprising ammonium alginate, methyl cellulose, propyl methyl cellulose, copolymers of ethylene glycol and propylene glycol, octylphenol ethoxylate, polyoxyethylene cetyl ether,
- a may be greater than or equal to 0,
- b, c, d, e and f are greater than 0, and preferably greater than 0.1,
- f is equal to (2a+2b+6c+6d+3e)/2,
- the ratio (a + b)/(c + d) may be between 0.9 and 1.1,
- the ratio a/b may be greater than or equal to 0 and less than or equal to 1.5, and is preferably between 0.1 and 0.4,
- the ratio c/d may be between 0.2 and 5, and is preferably between 1 and 2.5,
- the ratio (a+b+c+d)/e may be between 0.6 and 5, and
- p is the percentage by weight of C in relation to the total weight of the mixed oxide of formula (I), and may be greater than 0% and less than or equal to 40%.

Said mixed oxide of formula (I) preferably comprises an amorphous phase and a pseudo-crystalline phase isostructural with wolframite.

For the purposes of the present invention, the term "pseudo-crystalline phase isostructural with wolframite" should be understood to mean a precursor of the crystalline phase isostructural with wolframite that, when it is calcined in an oxidizing atmosphere at a temperature greater than or equal to 600°C for a period greater than or equal to 3 hours, evolves into a crystalline phase isostructural with wolframite.

The term "crystalline phase isostructural with wolframite" should be understood to mean a phase having the same type of crystalline structure as natural wolframite (a mineral composed of a mixed tungstate of iron and manganese), belonging to the class with monoclinic-prismatic symmetry, but with a different chemical composition in which W, Fe, Mn may be partly or completely substituted by different metals. The above-mentioned phase has an XRD pattern comprising the signals indicated in Table 1 below.

**Table 1**

| N° | 2θ (°) | Signal intensity |
|---|---|---|
| 1 | 15.6 ± 0.1 | Weak |
| 2 | 19.3 ± 0.2 | Strong |
| 3 | 24.0 ± 0.3 | Strong |
| 4 | 24.9 ± 0.3 | Strong |
| 5 | 30.9 ± 0.5 | Very strong |
| 6 | 31.5 ± 0.5 | Medium |
| 7 | 36.7 ± 0.5 | Strong |
| 8 | 37.2 ± 0.5 | Weak |
| 9 | 39.2 ± 0.5 | Medium |
| 10 | 41.7 ± 0.6 | Strong |
| 11 | 46.5 ± 0.6 | Weak |
| 12 | 48.1 ± 0.6 | Very weak |
| 13 | 49.1 ± 0.6 | Weak |
| 14 | 52.3 ± 0.7 | Medium |
| 15 | 54.7 ± 0.7 | Strong |
| 16 | 58.8 ± 0.7 | Very weak |
| 17 | 62.6 ± 0.7 | Medium |
| 18 | 63.7 ± 0.7 | Weak |
| 19 | 66.0 ± 0.8 | Strong |
| 20 | 68.9 ± 0.8 | Weak |

In particular, the mixed oxide comprising the metal Me is further characterized by at least two additional signals in the range between 25° and 28° of the angle 2θ (with very weak intensity at 26.2° and weak intensity at 26.6°).

In a particularly preferred aspect, the mixed oxide of formula (I) has a molar composition of Ni₁:MO_{0.5}:W_{0.5}:Al₁:O_{6.5} and comprises an amorphous phase and a pseudo-crystalline phase isostructural with wolframite.

The mixed oxide of formula (I) in the active phase of the catalytic material used in the process of the present invention may be prepared by various methods known in the art. For example, said mixed oxide of formula (I) may be prepared by a method comprising the following steps:
1) mixing with a suitable volume of water at least one soluble source of W and at least one soluble source of Mo until a clear aqueous solution is obtained;
2) optionally, adding to the solution that was obtained in step 1 at least one source of at least one element Me;
3) adding to the mixture that was obtained in the preceding step at least one source of Ni;
4) applying a first heat treatment at temperatures between 50° and 80°C to the mixture that was obtained in step 3, with stirring;
5) adding to the mixture that was obtained in step 4 at least one soluble, hydrolysable or dispersible source of Al, and at least one polymeric organic compound;
6) applying a second heat treatment at temperatures between 80°C and 95°C to the mixture that was obtained in the preceding step, with stirring, to obtain a suspension;
7) applying a drying step to the suspension that was obtained in step 6 to obtain a solid phase;
8) calcining said solid phase that was obtained in the preceding step to obtain the mixed oxide of formula (I).

The first step of the method consists in dissolving the source of tungsten and the source of molybdenum in a quantity of preferably deionized or distilled water that is at least sufficient to obtain a clear solution.

Sources of Mo and W that may be used are for example oxides, particularly acidic oxides, the corresponding acids and their ammonium salts. Ammonium heptamolybdate is preferably used as the source of molybdenum and ammonium metatungstate as the source of tungsten.

In the above-mentioned sources of tungsten and molybdenum, the respective metals both have a valency of 6.

The mixture obtained is stirred continuously until a clear solution is obtained, indicating that the sources of Mo and W have completely dissolved.

Preferably, step 1 of said method may be carried out at a temperature between 25°C and 50°C, in order to favour the above-mentioned dissolution.

In accordance with optional step 2, a soluble or insoluble or partly soluble source of the element Me, preferably a soluble source, may be added to the clear solution that is obtained.

Without wishing to espouse a particular theory, we would suggest that the above-mentioned element Me, when present, may have the function of favouring the formation of the pseudo-crystalline phase that is isostructural with wolframite.

When the method includes the addition of the element Me, as already stated, said element may be selected from the group comprising Zn, Cd, Mn and Cu and a mixture thereof.

Sources of the element Me that may be used may for example be the corresponding nitrates, acetates, carbonates and hydroxycarbonates.

In the above-mentioned sources of the element Me, the respective metals (Zn, Cd, Mn and Cu) all have a valency of 2.

Preferably, the optional step 2 of the method for preparing the mixed oxide may be omitted. In this case, there is no element Me in the mixed oxide of formula (I) that is obtained at the end of the above-mentioned method, or in other words the index "a" of said element Me in the above-mentioned formula (I) is equal to 0.

Then, in accordance with step 3 of the above-mentioned method, a soluble, insoluble or partly soluble, preferably partly soluble, source of nickel is added. Sources of Ni that may be used may be the corresponding nitrates, acetates, hydroxycarbonates, carbonates and acetylacetonates.

Preferably, step 3 of said method may be carried out at a temperature between 50°C and 70°C, in order to favour the dissolution of said source of Ni in the mixture that was obtained in the preceding step.

In step 4, the mixture obtained undergoes a first heat treatment at temperatures between 50°C and 80°C, with stirring, for a period between 10 minutes and 1 hour.

At the end of this heat treatment step, the method provides, in step 5, for at least one soluble, hydrolysable or dispersible source of aluminium and at least one polymeric organic compound to be added to the mixture that has been obtained in this way.

As sources of aluminium there may be used for example aluminium lactate, or dispersible alumina, or alumina monohydrate, or alumina trihydrate, or aluminium tris-alkoxides in which the alkyl is linear or branched and may contain from 2 to 5 carbon atoms, with the use of a dispersible alumina being preferable.

Preferably, the dispersible alumina that is added as the source of aluminium in step 5 of said method may be a boehmite or pseudo-boehmite characterized by particles having an average diameter of less than 100 µm. Dispersible aluminas that may be used may be for example the commercially available boehmites in the ranges: Versal®, Pural®, Catapal®, Dequadis®, Disperal® and Dispal®.

Among the dispersible sources of aluminium there may be particularly preferred aluminas that are dispersible at room temperature with stirring in water or in an aqueous solution containing a monovalent acid: in the disperse phase, these aluminas have sizes in the nano range, characterized by particle dimensions of between 10 and 500 nm in the dispersion. Dispersible aluminas of this kind that may advantageously be used are for example the commercially available boehmites in the ranges: Disperal P3® (Al₂O₃ 68% by weight) and Dequadis HP®.

Preferably, the sources of hydrolysable aluminium that guarantee a good dispersion thereof from the monomer precursors of aluminium may be trialkyl aluminates in which the alkyl group contains from 3 to 4 carbon atoms.

It should be noted that the sources of aluminium that may be used in this step do not include γ-aluminas.

Preferably, the source of Al may be added to step 5 as a dispersion that has previously been prepared as follows: a soluble, hydrolysable or dispersible source of Al is added in quantities of between 5 and 25% by weight, preferably between 8 and 18% by weight, to an aqueous solution containing between 0.2 and 2% by weight of acetic acid. The dispersion that is obtained is stirred for a period between 1 and 48 hours, preferably between 3 and 24 hours, at a temperature between 25 and 90°C, preferably between 30 and 70°C.

Then, a polymeric organic compound is added to the dispersion that is obtained after the source of Al has been added, in order to favour the homogeneity of the composition and to improve the textural properties of the final mixed oxide.

The above-mentioned polymeric organic compound that is added in step 5 of said method preferably comprises one or more hetero atoms chosen from N and O and may for example be selected from the group comprising ammonium alginate, methyl cellulose, propyl methyl cellulose, copolymers of ethylene glycol and propylene glycol, octylphenol ethoxylate, and polyoxyethylene cetyl ether.

Said polymeric organic compound may be added in percentages varying between 1% and 10% by weight in relation to the weight of the metals in the mixture.

It is therefore clear that the quantity of polymeric organic compound in the method for preparing the mixed oxide of the active phase of the catalytic material is particularly low: this has the effect that during the subsequent calcination of the mixed oxide, smaller quantities of volatile organic, and in particular nitrogenous, compounds are produced, such that treatment of the emitted vapours in post-combustion chambers is not necessarily required.

Alternatively, in step 5 of the above-mentioned method, rather than separately adding at least one soluble, hydrolysable or dispersible source of Al and then at least one polymeric organic compound, it is possible to add a separately prepared dispersion that comprises both said at least one soluble, hydrolysable or dispersible source of Al and said at least one polymeric organic compound.

The procedure for preparing the above-mentioned dispersion comprising both Al and the polymeric organic compound is as follows: a soluble, hydrolysable or dispersible source of Al is added to an aqueous solution containing acetic acid, and the dispersion obtained is mixed with an aqueous solution comprising a polymeric organic compound that was previously stirred continuously for a period between 20 minutes and 1 hour at a temperature between 25 and 80°C.

In this case too, the polymeric organic compound may be added in percentages varying between 1% and 10% by weight in relation to the weight of the metals in the mixture.

After the polymeric organic compound has been added, the dispersion comprising both the soluble, hydrolysable or dispersible source of Al and the polymeric organic compound is stirred for a period between 1 and 48 h, preferably between 3 and 24 h, at a temperature between 25 and 90°C, preferably between 30 and 70°C, before being added to the mixture containing the metals that was obtained in step 3 of the preparation method.

Whether the procedure used is to add the source of Al separately from the polymeric organic compound or to add these two components together as described above, the mixture obtained, which comprises Mo, W, Ni, Al, the polymeric organic compound, and optionally Me, further undergoes a second heat treatment in the succeeding step 6, at temperatures between 80°C and 95°C, with stirring, for a period between 5 and 30 hours. This second heat treatment allows a homogeneous suspension to be obtained in which the metal components, which may come from insoluble or partly soluble sources, may interact and be in intimate contact.

The suspension obtained in this way undergoes a step 7 of drying. The main function of the drying in step 7 is to remove the water in the suspension, thus allowing a solid phase to be obtained.

The drying in step 7 may be performed using any of the techniques known to those skilled in the art, for example in a fixed oven or by means of belt drying or flash drying or spray drying, and preferably by spray drying.

Preferably, the drying may be performed at a temperature between 100°C and 250°C.

The period required to arrive at a solid phase is related to the method used to perform the drying operation in step 7. Those skilled in the art will be able to identify the most appropriate period for each method used in order to arrive at the desired solid phase.

It should be noted that step 6, in which the second heat treatment is carried out, is distinct from the drying step 7 even though the two steps may possibly be performed using the same principle, namely by applying heat for an appropriate period; this is because, unlike step 6, from which a suspension may be obtained, albeit one that is extremely dense, in the drying step 7 it is essential that a solid phase substantially free of any liquid phase is obtained.

The catalytic material used in the process of the present invention may be shaped, for the purpose of increasing its surface area and improving its mechanical characteristics (for example compressive strength and abrasion resistance), which moreover contributes to facilitating the operations of filling, running and emptying the reactor in which said process is carried out, either where the above-mentioned catalytic material has been prepared using the method indicated above or where it has been prepared by other methods. When the catalytic material is prepared in accordance with the method for preparing the mixed oxide indicated above, said method may comprise an additional step 7' immediately following step 7, in which the dried solid phase obtained in said step 7 is shaped.

Any shaping techniques may be used for this purpose. Shaping may be performed by pelletizing, extrusion, granulation, spheronization, or atomization by spray drying.

In order to facilitate the shaping operations and to improve the rheological characteristics of the catalytic material, in this step it is possible to add one or more organic additives to the mixed oxide in order to improve the rheological characteristics of the above-mentioned mixed oxide. These additives may preferably comprise: amides, celluloses and derivatives thereof, stearates, glycols, surfactants, or a mixture thereof.

In the shaping phase, the catalytic material is given different shapes, for example taking the form of spheres, microspheres, granules, pellets, cylindrical, trilobe, quadrilobe extrudates, etc. A particularly preferred aspect is for said catalytic material to be in the form of pellets having a diameter varying between 1.5 and 5 mm and a length varying between 1 and 50 mm.

The final step of the method of preparing the mixed oxide of the active phase of the catalytic material that is used in the process of the present invention provides for the partial calcination of the prepared mixed oxide. The calcination in step 8 may be performed in air or in an inert atmosphere, at temperatures greater than or equal to 200°C and less than or equal to 450°C. In a preferred aspect, the calcination may be performed at temperatures between 300°C and 400°C.

The partial calcination may be carried out at a constant temperature or with ramped (or programmed) temperatures. The period of calcination may preferably vary from a minimum of 3 hours up to 20 hours. Depending on the temperature and period of calcination, the mixed oxide obtained may contain variable percentages, greater than 0 and less than or equal to 40%, of the organic component C and/or a residue of said organic component C.

For the purposes of the present invention, the term "residue of the organic component C" should be understood to mean all the compounds, not defined in more detail, that may be present and that are derived from said organic component C as a result of heat degradation or decomposition during the calcination process.

The quantity of organic component C (and where applicable the above-mentioned residue of the organic component C) may be measured by thermogravimetric analysis and differential thermal analysis (TG-DTA) of a sample of mixed oxide, using a Mettler thermobalance (model TG50). The test is carried out by heating the sample in an air flow (200 cm³/min) in steps of 10°C/min from 30°C to 600°C. The content of the organic component C (and where applicable the above-mentioned residue of the organic component C) in per cent ("p") by weight in relation to the total weight of the mixed oxide is calculated on the basis of the loss in weight of the sample analysed by TG-DTA in the range from 150-600°C.

Preferably, after calcination, the percentage "p" of said organic component C and where applicable of the residue of said organic component C in the composition of the mixed oxide may be greater than or equal to 0.01% and less than or equal to 30%.

More preferably, "p" may be greater than or equal to 0.2% and less than or equal to 10%. In a preferred aspect, at least one inorganic binder selected from the materials conventionally used as inorganic binders for catalysts may be added to the active phase of the catalytic material used in the process of the invention. Non-restrictive examples of inorganic binders may comprise for example silica, alumina, silica-alumina, silica coated with alumina and alumina coated with silica, gibbsite, titanium dioxide, zirconia, anionic and cationic clays, saponite, bentonite, kaolin, sepiolite or hydrotalcite, or mixtures thereof. Preferred binder materials are silica, alumina, silica-alumina or mixtures thereof. In particular, as a source of alumina there may be used γ-alumina, possibly in the form of an aqueous dispersion.

When the mixed oxide of the active phase of the catalytic material used in the process of the present invention is prepared using the method described above, if said catalytic material comprises an inorganic binder, said method comprises an additional step 5' immediately following step 5 of said method, that is to say after the polymeric organic compound has been added, or if the latter is added mixed with the source of aluminium, after said mixture has been added to the mixture obtained in step 4, in which an inorganic binder is added.

As an alternative, the inorganic binder may be added in an additional step 6' immediately following step 6 of the method described above, in which the water in the suspension is used to facilitate the dispersion of the added inorganic phase, or after step 7, which in this case becomes optional.

Together with the inorganic binder, it is possible to add mineral or organic acids, plasticizers and pore-forming agents in accordance with the prior art.

The above-mentioned inorganic binder may be present in a quantity of between 0.1% and 50% by weight in relation to the total weight of said catalytic material.

Preferably, the above-mentioned inorganic binder may be present in a quantity of between 10% and 50% by weight in relation to the total weight of said catalytic material.

Even more preferably, the above-mentioned inorganic binder may be present in a quantity of between 30% and 50% by weight in relation to the total weight of said catalytic material. When at least one inorganic binder containing Al is present in the catalytic material used in the process of the present invention, there may be observed in said catalytic material two structurally different forms of said metal with which different functions are associated (respectively the component of the active phase and the inorganic binder).

This is linked to the fact that the aluminium is added in two distinct phases of preparing the catalytic material itself: the first time in the phase of preparing the mixed oxide, before said mixed oxide undergoes hydrothermal treatment, and the second as the inorganic binder, for example during the phase of preparing the paste to be shaped.

The presence of two structurally different forms of aluminium in the catalytic material described above has been confirmed by a comparison, using solid-state ²⁷Al MAS NMR spectroscopy, between a mixed oxide of formula (I) and the corresponding mixed oxide shaped in the presence of an Al-based inorganic binder.

According to a preferred embodiment, in the process of the present invention the hydrotreatment may be carried out in the presence of the catalytic material wherein the total quantity of the metals (Ni + Mo + W), calculated as oxides, in said mixed oxide of the active phase of said catalytic material is between 40% and 85% by weight with respect to the total weight of the catalytic material itself, and is preferably between 42% and 82% by weight of the catalytic material.

According to another embodiment, in the catalytic material of the process of the present invention the total quantity of the metals (Ni + W), calculated as oxides, in said mixed oxide of the active phase of said catalytic material is between 28% and 64% by weight in relation to the total weight of the active phase itself, and is preferably between 30% and 61% by weight.Preferably, the catalytic material described above may be used in the process of the present invention in sulfided form, i.e. in the form obtained after submitting it to a sulfidation process.

Sulfidation of the catalytic material suitable for the present invention, preferably in the oxide form, may be performed by any of the techniques known to those skilled in the art using any sulfiding agent, as described for example by J.H. Gary and G.E. Handwerk in: Petroleum Refining - Technology and Economics (2001, M. Dekker) p. 177.

Sulfidation may be carried out *in situ,* which is to say in the same reactor in which the hydrotreatment is to be subsequently performed, or indeed *ex situ,* in a separate reactor. The process of sulfidation may be carried out, for example, at high temperature in a reducing atmosphere, for example composed of H₂S and H₂, or with CS₂ and H₂, preferably with H₂S and H₂ at a temperature between 300°C and 500°C, for a period sufficient to sulfide the initial mixed oxide. For example, the sulfidation may be carried out for a period of between 1 and 100 hours and preferably for a period between 15 and 50 hours. The overall pressure may range from 2 to 10 MPa, preferably from 2 to 5 MPa.

As an alternative, sulfiding of the catalytic material may be carried out using a solution of dimethyl disulfide (DMDS) in a hydrocarbon or a mixture of hydrocarbons, for example at a concentration of 0.5% by weight in relation to the total weight of the solution, at temperatures between 300°C and 500°C. According to another known method, sulfidation may be carried out by mean of a non-refined petroleum or natural gas stream containing sulphur compounds.

Sulfidation of the catalytic material may be carried out on the bulk active phase or on the catalytic material comprising a binder as previously described. According to what is generally known in the art, sulfidation of the catalytic material convert into sulphides the major part or even all the transition metal oxides in the material, leaving in the form of oxides the binder or the inert solid diluents, for instance Al₂O₃ or SiO₂, possibly present in the catalytic material as separate oxides.

It should be noted that, when the process of the present invention is carried out in the presence of a catalytic material in the sulfided form, a small amount of a sulfiding agent (e.g. DMDS) is preferably fed to the reactor, usually admixed with the feedstocks from renewable sources, although any other suitable feeding mean may be used. The sulfiding agent is preferably in such an amount as to provide from 0.02 to 0.5 % wt of sulphur (expressed as S) with respect to the renewable feedstock, preferably from 0.05 to 0.2 % wt.

Use of the catalytic material described above, preferably in sulfided form, in the process for deoxygenating a feedstock from renewable sources according to the present invention, promotes the elimination of oxygen from the molecules of fatty acid esters and/or free fatty acids of biological origin, preferably by the mechanism of decarbonylation/decarboxylation, by comparison with the reaction of hydro-deoxygenation with the formation of water. In particular, applying the process of the present invention, the percentage of total conversion of said molecules into linear or substantially linear paraffins may be greater than or equal to 90%, preferably greater than or equal to 95%, and even more preferably equal to 100%. The percentage of conversion of the molecules of fatty acid esters and/or free fatty acids of biological origin into linear or substantially linear paraffins that is obtained using decarbonylation/decarboxylation of said molecules is preferably greater than 60%. Said percentage conversion was calculated as described below: analysing the eluent mixture by gas chromatography, the relative weight quantity of paraffins having an odd number of carbon atoms, in particular C17 paraffins (which are presumed to have been obtained substantially from deoxygenation by decarbonylation/decarboxylation), and that of paraffins having an even number of carbon atoms, in particular C18 paraffins (which are presumed to have been obtained substantially from deoxygenation by hydro-deoxygenation with the formation of water), are determined; the ratio of the weight quantity of C17 paraffins to the total weight quantity of paraffins (C17 + C18) multiplied by 100 represents, with sufficient approximation, the percentage conversion [C17/(C17+C18) %wt] of the molecules of fatty acid esters and/or free fatty acids of biological origin into linear or substantially linear paraffins that is obtained by the mechanism of decarbonylation/decarboxylation.

In a preferred aspect, said percentage conversion by the mechanism of decarbonylation/decarboxylation is between 60% and 90%. More preferably, said percentage conversion is between 60 and 85%. In a particularly preferred aspect of the invention, the percentage conversion of the molecules of fatty acid esters and/or free fatty acids of biological origin into linear or substantially linear paraffins obtained by decarbonylation/decarboxylation is between 60% and 80%.

It should be noted that, in the conditions of the process of the present invention, preferably neither CO nor CO₂ obtained from decarbonylation/decarboxylation of the fatty acid esters and/or free fatty acids undergo substantial methanation, that is they are not converted to methane, or only to a negligible extent.

Consequently, when the process of the present invention is applied, it is possible to obtain a reduction in the hydrogen consumption and the enthalpy of reaction by comparison with the corresponding process by hydro-deoxygenation of the feedstock with the formation of water. For example, by comparison with the same deoxygenation reaction carried out with hydrogen in the presence of a supported catalyst based on transition metals from groups VIII and VIB, the use of the bulk catalytic material according to the present invention allows the quantity of hydrogen required to be reduced by approximately 30% and in particular conditions by up to 50%, as will be clear from the attached examples.

The reduction in the enthalpy of reaction is reflected in the fact that less heat is developed during the above-mentioned process, and that control of the temperature inside the reactor is improved: consequently, because there is less heat to dissipate, it is possible using the process of the present invention to reduce substantially the use of a "diluent feedstock" and/or the proportion of liquid fraction of the reaction effluent that is recycled, with a resulting significant increase in the yield of the process itself.

In particular, in a preferred aspect of the invention, in order to obtain sufficient control of the temperature the feedstock from renewable sources may be fed to the reaction zone in a concentration of between 30% and 70% by weight. More preferably, said feedstock from renewable sources is fed to the reaction zone in a concentration of between 34% and 60% by weight in relation to the weight of the total feedstock, diluted with a hydrocarbon or a mixture of hydrocarbons and/or with a recycled portion of the reaction effluent.

In a particularly preferred aspect of the invention, when the feedstock from renewable sources comprises or consists substantially of palm oil, said feedstock may be fed to the reaction zone in a concentration of between 34 and 45% by weight in relation to the weight of the total feedstock.

The feedstocks from renewable sources that are used in the process of the present invention may contain impurities (for example, trace metals, phosphatides, etc.) that generally result in a drop in catalytic activity.

As indicated above, usually this drop is compensated by progressively increasing the operating temperature of the hydrotreatment reactor from an initial temperature or start of run temperature (T_{SOR}), which corresponds to a substantially total conversion of the feedstock, to a final temperature or end of run temperature (T_{EOR}), where, as explained, T_{EOR} > T_{SOR}.

Most of the activity characterizing the catalytic material used in the process of the present invention allows a starting temperature that corresponds to substantially total conversion of the feedstock (T_{SOR}) to be set at lower values than those characteristic of the processes described in the art.

On the other hand, and as is well known to those skilled in the art, the temperature T_{EOR} is independent of the characteristics of the catalytic material, and depends on the type of process and the characteristics of the plant in which such a process is carried out (for example in metallurgy, etc.).

Consequently, the process of the present invention is characterized by an operational range of temperatures that goes with the greater difference (T_{EOR}-T_{SOR}) compared with the above-mentioned known processes, and this is reflected in a longer life for the catalytic material.

Preferably, the above-mentioned process is carried out at an initial temperature (T_{SOR}) which corresponds to substantially total conversion of the renewable feedstock of between 200°C and 400°C. More preferably, said process is carried out at a T_{SOR} of between 230°C and 350°C.

In a particularly preferred aspect of the invention, when the above-mentioned renewable feedstock comprises or consists substantially of palm oil, said process is carried out at a T_{SOR} of between 240°C and 300°C.

Moreover, in a preferred aspect, the above-mentioned process is carried out at a pressure of between 1 and 15 MPa, preferably between 2 and 10 MPa.

In a further preferred aspect, the ratio of hydrogen to the feedstock from renewable sources is between 100 and 1000 NL (H₂)/L (feedstock). More preferably, the ratio of hydrogen to the feedstock from renewable sources is between 250 and 750 NL (H₂)/L (feedstock), and even more preferably between 300 and 500 NL (H₂)/L (feedstock).

The process of the present invention may be carried out in one or more reactors comprising one or more catalyst beds.

Preferably, the above-mentioned process is carried out in a fixed-bed hydrotreatment reactor.

When the present process is carried out in one or more fixed-bed reactors, it is preferably possible to operate at a weight hourly space velocity of catalyst (WHSV) in relation to the total quantity fed, that is to say including the portion of "diluent feedstock" and/or the recycled liquid fraction of the reaction effluent, of between 0.5 and 5 h⁻¹, and even more preferably between 0.8 and 2.5 h⁻¹.

The flow of hydrogen and that of the feedstock of renewable origin containing fatty acids and/or fatty acid esters may be fed to the reactor in the same or opposite directions, preferably being fed in the same direction.

Moreover, to improve control of the reaction environment temperature, it is possible to feed hydrogen and/or the feedstock of renewable origin between one catalyst bed and the next in the manner defined as "split feed" processing, and thus to create a constant or increasing temperature profile in the reaction zone.

The product output from the deoxygenation phase is an effluent that comprises a liquid fraction and a gaseous fraction. The liquid fraction comprises H₂O and a hydrocarbon fraction formed by a mixture of linear or substantially linear paraffins.

The gaseous fraction comprises hydrogen, CO, CO₂ and, where the feedstock from renewable sources comprises fatty acid esters, in particular fatty acid esters with glycerol, a mixture of C₁-C₄ hydrocarbons defined as "fuel gas". Moreover, small quantities of H₂S may also be present.

A typical composition of the gaseous fraction of the reaction effluent obtained in the conditions of Example 1 below, namely: p = 2.8 MPa; T = 265°C; H₂/palm oil = 690 NL (H₂)/L feedstock; WHSV = 2h⁻¹, determined by gas chromatography analysis, is shown in Table 2 below.

**Table 2**

| Component | Quantity in per cent (% vol) |
|---|---|
| CH₄ | 3.54 |
| C₂H₆ | 0.09 |
| C₃H₈ | 2.26 |
| C₄H₁₀ | 0.08 |
| CO | 3.0 |
| CO₂ | 4.32 |
| H₂S | 2.51 |
| H₂ | 84.2 |

It should be noted that the difference between the input and output compounds shows that the methane found in the above-mentioned gaseous fraction comes substantially from the decomposition of the dimethyl disulfide used as the sulfiding agent added to the feed in order to maintain the catalytic material in the sulfided form during the entire run of the process.

The above-mentioned gaseous and liquid fractions may be separated by feeding said effluent to a high-pressure gas/liquid separator. The separator generally operates at a pressure between 0.7 MPa and 14 MPa and at a temperature between 40°C and 350°C. Once the water has cooled down and condensed, after which it can be separated from the rest of the components, the remaining gaseous phase may then be treated in order to recover the hydrogen, which may be recycled, for example to the deoxygenation step. The hydrogen may be recovered by conventional methods for reducing H₂S, such as washing the gaseous effluent with amines such as methylethylamine (MEA) or diethylamine (DEA).

CO and CO₂ may be separated by being absorbed in solution: for example, CO may be absorbed in solutions of ammonia-copper complexes, while CO₂ may be absorbed in aqueous solutions of alkaline carbonates.

The liquid fraction that is separated off in the high-pressure separator substantially comprises a mixture of linear or substantially linear paraffins.

A portion of said separated liquid fraction may be recycled to the head of the deoxygenation reactor, as described above, in order to dilute the feedstock derived from renewable sources that is fed to the process of the invention, and to facilitate control of the processing temperature.

In a preferred aspect of the invention, the mixture of linear or substantially linear paraffins that are obtained from the above-mentioned deoxygenation process undergoes a further stage of catalytic hydroisomerization with hydrogen in the presence of a catalytic material, by techniques known to those skilled in the art, to convert at least a portion of said linear or substantially linear paraffins into branched paraffins.

The term "at least some of said linear or substantially linear paraffins" should be understood to mean a proportion greater than 25% of the total quantity of linear or substantially linear paraffins, and preferably a proportion of between 25% and 75% of the total quantity of paraffins sent to the hydroisomerization process.

In particular, hydroisomerization of the linear or substantially linear paraffins may be carried out in the presence of a catalytic material whereof the active phase comprises at least one metal in group VIII of the Periodic Table, supported on at least one solid substrate.

Said solid substrate may be amorphous or crystalline, and is preferably selected from the group comprising a zeolite in acidic form, silica-alumina, amorphous silica-alumina, mesoporous silica-alumina, mesoporous silica-alumina with phosphorus, and mixtures thereof. As is known to those skilled in the art, the term "zeolite in acidic form" should be understood to mean a zeolite containing Si e Al in the crystal lattice in which the cation sites are predominantly or entirely occupied by H⁺ ions. Preferably, said zeolite in acidic form is selected form the group comprising: zeolite Y, zeolite beta, ZSM-22, ZSM-23, ZSM-12 and ZSM-5.

The acid sites on the substrate are able to facilitate the isomerization reaction of the linear paraffins to give branched paraffins.

The metal in group VIII is preferably selected from the group comprising Pt, Pd, Ir and mixtures thereof. Preferably, said metals are preferably present in the hydroisomerization catalyst in a total quantity (in terms of metal in elemental form) of between 0.1% and 5% by weight in relation to the total weight of the catalytic material. The catalytic material is generally prepared by impregnating said solid substrate with a solution containing a precursor of the metals concerned. Impregnation is followed by a heat treatment in an oxidizing atmosphere in order to break down the precursor and to obtain the metals, which are dispersed on the surface of the solid substrate. The catalytic material used for the hydroisomerization reaction may be formulated and shaped by any of the techniques known to those skilled in the art. Said catalytic material generally undergoes an activating pre-treatment carried out in a hydrogen flow at a temperature between 250°C and 350°C. The hydroisomerization phase may be carried out in a reaction zone comprising one or more catalyst beds in one or more reactors. Preferably, the hydroisomerization is carried out in a fixed-bed reactor. In this case, heat control is not critical, since the reaction is slightly exothermic. For this reason, a reactor with adiabatic layers is recommended.

The mixture of linear or substantially linear paraffins produced in the deoxygenation step may be fed to the hydroisomerization zone in the same direction as the hydrogen or in the opposite direction.

The catalytic hydroisomerization may be carried out for example at a temperature between 250°C and 450°C, preferably between 280°C and 380°C, and/or at a pressure between 2.5 MPa and 10.0 MPa, preferably between 3.0 MPa and 5.0 MPa. Moreover, operation is preferably at a space velocity (LHSV) of between 0.5 and 2 h⁻¹. The volumetric ratio of H₂ to linear or substantially linear paraffin mixture is preferably between 200 and 1000 NL (H₂)/L (paraffins).

The mixture of linear or substantially linear paraffins and branched paraffins may advantageously be used as a diesel biofuel or as a biocomponent of a diesel fuel. In particular, the presence of the branched paraffins gives the fuel properties (such as CP and CFPP) suitable for use at low temperatures.

### Illustrative experimental examples

In order to put the present invention into practice and to illustrate it better, some non-restrictive examples are given below.

### Preparative example A (preparation of a bulk catalyst having the molar composition Mi₁:Mo_{0.5}:W_{0.5}-Al₁, in the absence of binder)

88.0 g of ammonium metatungstate hydrate (NH₄)₆H₂W₁₂O₄₀·4H₂O (85%wt WO₃) and 57.0 g of ammonium heptamolybdate (NH₄)₆Mo₇O₂₄·4H₂O (81.5%wt MoO₃) were added in sequence into 295 g of water at room temperature. 78.1 g of nickel hydroxycarbonate NiCO₃·Ni(OH)₂·4H₂O (61.6%wt NiO) were then added while heating the mixture to 70°C. The mixture was maintained at this temperature under constant stirring for at least 30 minutes.

In the meantime, 47.5 g of pseudoboehmite (Disperal® P3, Sasol, 70%wt Al₂O₃) were mixed at 249.7 g of an aqueous solution of acetic acid 0.6 % w/w. The mixture was maintained under stirring for about 2 hours, in order to obtain a homogeneous alumina dispersion.

Simultaneously, 4.7 g of methylcellulose Methocel® MC (Fluka) were added to 35.0 g of water at the temperature of 50°C; after 10 minutes a homogeneous dispersion of the polymer organic compounds was obtained.

This latter was slowly added to the alumina dispersion, under stirring at 50°C, obtaining a homogeneous dispersion containing both alumina and the polymer organic compound.

Said homogeneous dispersion was slowly added to the suspension containing Ni, Mo and W above described, maintained at 70°C under stirring. At the end, the temperature of the mixture was brought to 90°C and the obtained suspension was maintained under stirring for 18 hours.

At the end the dispersion was cooled and subjected to drying for about 20 minutes in a pre-heated stove at 200°C, then placed into a mechanical mixer and mixed at a temperature of about 50°C for about 2 hours, until obtaining a homogeneous paste with a suitable consistency to be extruded. The extrudate was aged at room temperature for 15 hours, then calcinated at 400°C and sieved (16-30 mesh).

The final extruded mixed oxide has the following molar composition: Ni₁:Mo_{0.5}:Wn_{0.5}:Al₁ and contain 1.0% by weight of organic component residue. In the catalyst, the content of NiO was 24% by weight in relation to the total weight of the catalyst.

### Preparative example B (Preparation of a bulk catalyst having the molar composition Mi₁:Mo_{0.5}:W_{0.5}:Al₁ in the presence of 30% by weight of Al₂O₃ as a binder)

The same procedure with the same reagents and in the same amounts as in the previous Preparative Example A, was repeated till to the thermal treatment at 90°C for 18 hours and cooling down of the dispersion at room temperature. Then, 110g of alumina (Versal® 250, 77.5 % wt Al₂O₃) and the above dispersion were mixed in a mechanical mixer at a temperature of about 50°C for about 2 hours, until obtaining a homogeneous paste with a suitable consistency to be extruded. The extrudate was aged at room temperature for 15 hours, then calcinated at 400°C and sieved (16-30 mesh). In the extruded catalyst, the content of NiO was 17% by weight in relation to the total weight of the catalyst.

### Preparative Example C (Preparation of a catalyst based on Ni and Mo supported on γ-alumina).

300 g of Versal® 250 were impregnated by wetness imbibition with an aqueous solution containing 50 g of Ni(CH₃COO)₂ * 4 H₂O (30 %wt NiO) and 150g of (NH₄)₆Mo₇O₂₄ * 4H₂O (81.5%wt MoO₃). The supported catalyst had a composition of 4% by weight of NiO and 25% by weight of MoO₃ in relation to the total weight of the catalyst. After imbibition, the solid was extruded, aged at room temperature for 15 hours, calcinated at 400°C and sieved (16-30 mesh).

### Examples 1-3 according to the invention (hydrotreatment of palm oil with bulk catalyst having the molar composition Ni₁:Mo_{0.5}:W_{0.5}:Al₁ in the absence of binder, at various temperatures)

A fixed-bed reactor having a volume of 170 ml, filled with 50 ml of catalytic material mixed with the same volume of SiC as solid inert diluent, was used. The catalytic material was constituted by the bulk catalyst having the molar composition Ni₁:Mo_{0.5}:W_{0.5}:Al₁, as obtained according to Preparative Example A.

The reactor was inside an oven that had three heating zones such that the entire catalyst bed was isothermal.

Before use, the catalytic material was treated with a sulfiding mixture composed of 3.7% by weight of dimethyl disulfide (DMDS) in n-dodecane (n-C₁₂), in the following conditions:
LHSV = 3h⁻¹
p H₂ = 3.0 MPa
T = 340°C
H₂/sulfiding mixture = 200 NL (H₂)/L
Duration of sulfidation = 26 h

After sulfidation, hydrogen was fed to the reactor, which had been brought to the temperatures indicated in Table 3, at a pressure of 2.8 MPa. Then, a mixture of palm oil (30% by weight in relation to the total weight of the mixture) in n-dodecane (used as a diluent feedstock in order to simulate recycling the reaction effluent) containing 0.12 % by weight of dimethyl disulfide was fed to the same reactor, in order to keep the active phase of the catalytic material in the sulfided state, at a space velocity of WHSV=2 h⁻¹ and a volumetric feed ratio of 690 NL (H₂)/L of feedstock.

The reaction products were analysed using a gas chromatography column with gas chromatograph Agilent 7890 A, with a flame ionization detector and HP capillary column 30 m x 0.32 mm HP coated with a film 0.25 µm thick and using isooctane as the internal standard.

The column temperature was held at 40°C for 10 minutes, then raised to 270°C at a ramp of 3°C/min, and thereafter held at the final temperature for a period of 20 minutes.

The concentration of the various compounds was determined by measuring the area of the corresponding peak, taking response factors into account.

The fuel yield (yield of C₁₅₊) was calculated by determining the percentage quantity of linear or substantially linear paraffins having a number of carbon atoms greater than or equal to 15 in relation to the weight of palm oil that was fed in.

The rate of deoxygenation by decarbonylation/decarboxylation was expressed as a percentage of the quantity of C₁₇ paraffins in relation to the total quantity of paraffins (C₁₇+C₁₈), as described above.

The hydrogen consumption was measured in terms of grams of hydrogen per 100 grams of palm oil.

The results obtained are shown in Table 3 below.

**Table 3**

| Example | Temperature (°C) | Conversion (%) | Yield C₁₅₊ (%) | C₁₇/(C₁₇+C₁₈) %wt | H₂ cons. %wt |
|---|---|---|---|---|---|
| 1 | 265 | 99.5 | 71.4 | 68 | 1.54 |
| 2 | 275 | 100 | 75.3 | 72 | 2.09 |
| 3 | 280 | 100 | 74.6 | 74 | 1.80 |

The composition of the gaseous fraction of the reaction effluent from Example 1 is shown in Table 2.

### Examples 4-6 according to the invention (hydrotreatment of palm oil with bulk catalyst having the molar composition Ni₁:Mo_{0.5}:W_{0.5}:Al₁ in the presence of 30% by weight of Al₂O₃ as a binder, in relation to the total weight of the catalyst, at various temperatures)

The examples were carried out as in Examples 1-3, except that the catalytic material used was the bulk catalyst with 30% by weight alumina as a binder, prepared as above described in the Preparative Example B. The WHSV was kept at a value of 2 h⁻¹, as in Examples 1-3.

The results obtained are shown in Table 4 below.

**Table 4**

| Example | Temperature (°C) | Conversion (%) | Yield C₁₅₊ (%) | C₁₇/(C₁₇+C₁₈) %wt | H₂ cons. %wt |
|---|---|---|---|---|---|
| 4 | 265 | 99.7 | 73.8 | 73 | 1.15 |
| 5 | 275 | 100 | 79.2 | 70 | 1.38 |
| 6 | 280 | 100 | 79.7 | 70 | 1.94 |

### Comparative examples 7-9 (hydrotreatment of palm oil with catalyst based on Ni and Mo and supported by γ-alumina, at various temperatures)

The examples were carried out with the same reactor and the same reaction conditions as in Examples 1-3, except that the catalytic material in the fixed bed was a supported catalyst prepared as described in the previous Preparative Example C.

The results obtained are shown in Table 5 below.

**Table 5**

| Example | Temperature (°C) | Conversion (%) | Yield C₁₅₊ (%) | C₁₇/(C₁₇+C₁₈) %wt | H₂ cons. %wt |
|---|---|---|---|---|---|
| 7 | 265 | 99.5 | 82.6 | 46 | 2.48 |
| 8 | 280 | 99.8 | 81.2 | 50 | 2.34 |
| 9 | 285 | 100 | 84.1 | 56 | 2.25 |

A comparison of the data in Tables 3, 4 and 5 leads to the following conclusions:
- the process according to the invention gives a high conversion percentage at lower initial temperatures (lower T_{SOR} values) by comparison with use of supported catalysts;
- in the above-mentioned process, deoxygenation by decarboxylation and decarbonylation is promoted with respect to the use of supported catalysts;

- the catalytic materials used in the process of the invention give equivalent results in respect of conversion, whether binder is present or not;
- the process allows high conversions to be obtained, against a lower consumption of H₂ as compared to the use of supported catalysts

### Example 10 according to the invention (hydrotreatment of palm oil with bulk catalyst having the molar composition Ni₁:Mo_{0.5}:W_{0.5}:Al₁ in the absence of binder, at pressures of 4.0 MPa)

The bulk catalyst fromPreparative Example A was used, the test being performed as described above in Examples 1-3, but with the following conditions: space velocity of WHSV=1 h⁻¹, volumetric ratio fed of 300 NL (H₂)/L of feedstock, p = 4.0 MPa, temperature 240°C. The results obtained are shown in Table 6.

**Table 6**

| Example | Conversion (%) | C₁₇/(C₁₇+C₁₈) %wt |
|---|---|---|
| 10 | 100 | 69 |

### Comparative example 11 (hydrotreatment of palm oil with catalyst based on Ni and Mo, supported on γ-alumina, at various temperatures)

The supported catalyst from Examples 7-9 was used (prepared according to Preparative Example C), in the same conditions as Example 10. The results obtained are shown in Table 7.

**Table 7**

| Example | Conversion (%) | C₁₇/(C₁₇+C₁₈) %wt |
|---|---|---|
| 11 | 85 | 50 |

It is clear that when the operating pressure is increased, activity of the bulk catalyst increases, and total conversion of the triglycerides can already be obtained at 240°C. However, the supported catalyst gives definetly worse conversion (85%) and a lower ratio of C₁₇/(C₁₇+C₁₈) by comparison with the bulk catalyst used in the same conditions.

### Example 12 according to the invention (hydrotreatment of a mixture of free fatty acids with bulk catalyst having the molar composition Ni₁:Mo_{0.5}:W_{0.5}:Al₁ in the absence of binder, at various temperatures)

By using the bulk catalyst from Examples 1-3 and carrying out the test as described above, but at a temperature of 250°C and with a WHSW= 0.53 h⁻¹, the conversion of a mixture of fatty acids comprising palmitic acid (44% by weight in relation to the total weight of the mixture), oleic acid (46% by weight) and stearic acid (10% by weight) was tested. Said mixture was fed to the reaction zone, diluted in a mixture of C₁₄-C₁₈ n-paraffins to simulate recycling, in a final concentration of 30% by weight in relation to the total weight of the fed mixture. At 250°C, total conversion of the fatty acids was obtained, with a contribution by the decarbonylation/decarboxylation reaction, calculated from the ratio of C₁₇/(C₁₇+C₁₈) at 70% by weight.

Finally, it will be appreciated that further modifications and variants may be made to the process that is described and illustrated here, without departing from the scope of the attached claims.

## Claims

1. A process for deoxygenating a feedstock from renewable sources containing a mixture of fatty acid esters and/or free fatty acids of biological origin by hydrotreatment, which comprises reacting said feedstock in at least one reaction zone with hydrogen in the presence of a bulk catalytic material whereof the active phase comprises at least one mixed oxide of Ni, Mo, W, Al, optionally at least one metal Me selected from the group comprising Zn, Cd, Mn, Cu and a mixture thereof, giving a reaction product comprising a liquid fraction and a gaseous fraction, wherein the liquid fraction comprises a mixture of linear or substantially linear paraffins; and wherein said process has high selectivity towards the mechanism of decarbonylation/decarboxylation of the free fatty acids and/or their esters in relation to the mechanism of hydro-deoxygenation with the formation of water.

2. A process according to claim 1, wherein the total quantity of the metals (Ni + Mo + W), calculated as oxides, in said mixed oxide of the active phase of said catalytic material is between 40% and 98% by weight in relation to the total weight of the active phase itself, and is preferably between 42% and 85% by weight.

3. A process according to claim 1 or 2, wherein the total quantity of the metals (Ni + W), calculated as oxides, in said mixed oxide of the active phase of said catalytic material is between 28% and 84% by weight in relation to the total weight of the active phase itself, and is preferably between 30% and 64% by weight.

4. A process according to any one of claims 1 to 3, wherein the molar ratio between Mo and W in the mixed oxide of the active phase of said catalytic material is between 0.90 and 1.10 and is preferably between 0.95 and 1.05.

5. A process according to any one of claims 1 to 4, wherein the active phase of said catalytic material comprises at least one mixed oxide having the following formula (I):
Mea Nib Mo_{c} Wd Ale O_{f} · pC (I),
where:
- Me is selected from the group comprising Zn, Cd, Mn, Cu and a mixture thereof,
- C is an organic component, or a residue obtained by partial calcination of said organic component, resulting from a polymeric organic compound selected from the group comprising ammonium alginate, methyl cellulose, propyl methyl cellulose, copolymers of ethylene glycol and propylene glycol, octylphenol ethoxylate, polyoxyethylene cetyl ether,
- a may be greater than or equal to 0,
- b, c, d, e and f are greater than 0, and preferably greater than 0.1,
- f is equal to (2a+2b+6c+6d+3e)/2,
- the ratio (a + b)/(c + d) may be between 0.9 and 1.1,
- the ratio a/b may be greater than or equal to 0 and less than or equal to 1.5, and is preferably between 0.1 and 0.4,
- the ratio c/d may be between 0.2 and 5, and is preferably between 1 and 2.5,
- the ratio (a+b+c+d)/e may be between 0.6 and 5, and
- p is the percentage by weight of C in relation to the total weight of the mixed oxide of formula (I), and may be greater than 0% and less than or equal to 40%.

6. A process according to any one of claims 1 to 5, wherein said mixed oxide comprises an amorphous phase and a pseudo-crystalline phase isostructural with wolframite.

7. A process according to any one of claims 1 to 6, wherein at least one inorganic binder is added to the active phase of the catalyst material.

8. A process according to claim 7, wherein said at least one inorganic binder is present in a quantity of between 0.1 % and 50% by weight, preferably between 10% and 50% by weight, more preferably between 30% and 50% by weight, in relation to the total weight of said catalytic material.

9. A process according to any one of claims 1 to 8, wherein the total quantity of the metals (Ni + Mo + W), calculated as oxides, in said mixed oxide of the active phase of said catalytic material is between 40% and 85% by weight with respect to the total weight of the catalytic material itself, and is preferably between 42% and 82% by weight of the catalytic material.

10. A process according any one of claims 1 to 9, wherein the total quantity of the metals (Ni + W), calculated as oxides, in said mixed oxide of the active phase of said catalytic material is between 28% and 64% by weight in relation to the total weight of the active phase itself, and is preferably between 30% and 61% by weight.

11. A process according to any one of claims 1 to 10, wherein said catalytic material is in sulfided form.

12. A process according to any one of claims 1 to 11, wherein the percentage conversion of the molecules of said fatty acid esters and/or free fatty acids of biological origin into linear or substantially linear paraffins performed by decarbonylation/decarboxylation of said molecules is greater than 60% and preferably between 60% and 90%, more preferably between 60% and 85%, even more preferably between 60% and 80%.

13. A process according to any one of claims 1 to 12, wherein said feedstock from renewable sources is fed to the reaction zone in a concentration of between 30% and 70% by weight and preferably between 34% and 60% by weight in relation to the weight of the total feedstock, diluted with a hydrocarbon or a mixture of hydrocarbons and/or with a recycled portion of the reaction effluent.

14. A process according to any one of claims 1 to 13, carried out at an initial temperature (T_{SOR}), which corresponds to substantially total conversion of the renewable feedstock, of between 200°C and 400°C and preferably between 230°C and 350°C.

15. A process according to any one of claims 1 to 14, carried out at a pressure of between 1 and 15 MPa, preferably between 2 and 10 MPa.

16. A process according to any one of claims 1 to 15, wherein the ratio between hydrogen and the feedstock from renewable sources is between 100 and 1000 NL (H₂)/L (feedstock), preferably between 250 and 750 NL (H₂)/L (feedstock), more preferably between 300 and 500 NL (H₂)/L (feedstock).

17. A process according to any one of claims 1 to 16, carried out in one or more fixed-bed reactors, which is operated at a weight hourly space velocity of catalyst (WHSV) of between 0.5 and 5 h⁻¹, even more preferably between 0.8 and 2.5 h⁻¹.

18. A process according to any one of claims 1 to 17, wherein said mixture of linear or substantially linear paraffins undergoes a further stage of catalytic hydroisomerization with hydrogen in the presence of a catalytic material, to convert at least a portion of said linear or substantially linear paraffins into branched paraffins.

19. A process according to claim 5, wherein said mixed oxide of formula (I) has a molar composition of Ni₁:Mo_{0.5}:W_{0.5}:Al1:O_{6.5} and comprises an amorphous phase and a pseudo-crystalline phase isostructural with wolframite.

## Patentansprüche

1. Verfahren zur Desoxygenierung eines Ausgangsmaterials aus erneuerbaren Quellen, enthaltend ein Gemisch von Fettsäureestern und/oder freien Fettsäuren biologischen Ursprungs durch Hydrobehandlung, welches das Umsetzen des Ausgangsmaterials in mindestens einer Reaktionszone mit Wasserstoff in der Gegenwart eines katalytischen Massematerials umfaßt, wobei die aktive Phase mindestens ein Mischoxid von Ni, Mo, W, Al umfaßt, gegebenenfalls mindestens ein Metall Me ausgewählt ist aus der Gruppe, umfassend Zn, Cd, Mn, Cu und ein Gemisch davon, wodurch ein Reaktionsprodukt erhalten wird, umfassend eine flüssige Fraktion und eine gasförmige Fraktion, wobei die flüssige Fraktion ein Gemisch von linearen oder im Wesentlichen linearen Paraffinen umfaßt, und wobei das Verfahren hohe Selektivität bezüglich des Decarbonylierung/Decarboxylierung-Mechanismus der freien Fettsäuren und/oder deren Estern in Bezug auf den Hydro-Desoxygenierung-Mechanismus mit der Bildung von Wasser aufweist.

2. Verfahren gemäß Anspruch 1, wobei die Gesamtmenge der Metalle (Ni + Mo + W), berechnet als Oxide, in dem Mischoxid der aktiven Phase des katalytischen Materials zwischen 40 Gew.-% und 98 Gew.-% bezogen auf das Gesamtgewicht der aktiven Phase selbst ist und vorzugsweise zwischen 42 Gew.-% und 85 Gew.-% ist.

3. Verfahren gemäß Anspruch 1 oder 2, wobei die Gesamtmenge der Metalle (Ni + W), berechnet als Oxide, in dem Mischoxid der aktiven Phase des katalytischen Materials zwischen 28 Gew.-% und 84 Gew.-% bezogen auf das Gesamtgewicht der aktiven Phase selbst ist und vorzugsweise zwischen 30 Gew.-% und 64 Gew.-% ist.

4. Verfahren gemäß einem der Ansprüche 1 bis 3, wobei das molare Verhältnis zwischen Mo und W in dem Mischoxid der aktiven Phase des katalytischen Materials zwischen 0,90 und 1,10 ist und vorzugsweise zwischen 0,95 und 1,05 ist.

5. Verfahren gemäß einem der Ansprüche 1 bis 4, wobei die aktive Phase des katalytischen Materials mindestens ein Mischoxid mit der folgenden Formel (I) umfaßt:
Mea Nib Mo_{c} Wd Ale O_{f} · pC (I),
wobei:
- Me ausgewählt ist aus der Gruppe, umfassend Zn, Cd, Mn und Cu und ein Gemisch davon,
- C eine organische Komponente oder ein Rest, erhalten durch teilweise Calcinierung der organischen Komponente, resultierend aus einer polymeren organischen Verbindung, ausgewählt aus der Gruppe, umfassend Ammoniumalginat, Methylcellulose, Propylcellulose, Propylmethylcellulose, Copolymere von Ethylenglycol und Propylenglycol, Octylphenolethoxylat, Polyoxyethylencetylether, ist,
- a größer als oder gleich 0 sein kann,
- b, c, d, e und f größer als 0 sind und vorzugsweise größer als 0,1,
- f gleich (2a+2b+6c+6d+3e)/2 ist
- das Verhältnis (a + b)/(c + d) zwischen 0,9 und 1,1 sein kann,
- das Verhältnis a/b größer als oder gleich 0 und weniger als oder gleich 1,5 sein kann, und vorzugsweise zwischen 0,1 und 0,4 ist,
- das Verhältnis c/d zwischen 0,2 und 5 sein kann und vorzugsweise zwischen 1 und 2,5 ist,
- das Verhältnis (a+b+c+d)/e zwischen 0,6 und 5 sein kann, und
- p der Gewichtsanteil von C in Bezug auf das Gesamtgewicht des Mischoxids der Formel (I) ist und größer als 0% und weniger als oder gleich 40% sein kann.

6. Verfahren gemäß einem der Ansprüche 1 bis 5, wobei das Mischoxid eine amorphe Phase und eine pseudokristalline Phase isostrukturell mit Wolframit umfaßt.

7. Verfahren gemäß einem der Ansprüche 1 bis 6, wobei mindestens ein anorganisches Bindemittel zu der aktiven Phase des Katalysatormaterials zugegeben wird.

8. Verfahren gemäß Anspruch 7, wobei das mindestens eine anorganische Bindemittel in einer Menge von zwischen 0,1 Gew.-% und 50 Gew.-%, vorzugsweise zwischen 10 Gew.-% und 50 Gew.-%, mehr bevorzugt zwischen 30 Gew.-% und 50 Gew.-% in Bezug auf die Gesamtmenge des katalytischen Materials vorliegt.

9. Verfahren gemäß einem der Ansprüche 1 bis 8, wobei die Gesamtmenge der Metalle (Ni + Mo + W), berechnet als Oxide, in dem Mischoxid der aktiven Phase des katalytischen Materials zwischen 40 Gew.-% und 85 Gew.-% bezüglich der Gesamtmenge des katalytischen Materials selbst ist und vorzugsweise zwischen 42 Gew.-% und 82 Gew.-% des katalytischen Materials ist.

10. Verfahren gemäß einem der Ansprüche 1 bis 9, wobei die Gesamtmenge der Metalle (Ni + W), berechnet als Oxide, in dem Mischoxid der aktiven Phase des katalytischen Materials zwischen 28 Gew.-% und 64 Gew.-% bezogen aus das Gesamtgewicht der aktiven Phase selbst ist und vorzugsweise zwischen 30 Gew.-% und 61 Gew.-% ist.

11. Verfahren gemäß einem der Ansprüche 1 bis 10, wobei das katalytische Material in Sulfid-Form vorliegt.

12. Verfahren gemäß einem der Ansprüche 1 bis 11, wobei die prozentuale Umwandlung der Moleküle der Fettsäureester und/oder freien Fettsäuren biologischen Ursprungs in lineare oder im Wesentlichen lineare Paraffine, durchgeführt durch Decarbonylierung/Decarboxylierung der Moleküle, mehr als 60% und vorzugsweise zwischen 60% und 90%, mehr bevorzugt zwischen 60% und 85%, noch mehr bevorzugt zwischen 60% und 80%, beträgt.

13. Verfahren gemäß einem der Ansprüche 1 bis 12, wobei das Ausgangsmaterial aus erneuerbaren Quellen in die Reaktionszone in einer Konzentration von zwischen 30 Gew.-% und 70 Gew.-% und vorzugsweise zwischen 34 Gew.-% und 60 Gew.-% in Bezug auf das Gewicht des Gesamtausgangsmaterials, verdünnt mit einem Kohlenwasserstoff oder einem Gemisch von Kohlenwasserstoffen und/oder mit einem recyclierten Anteil des Reaktionsausflusses, eingespeist wird.

14. Verfahren gemäß einem der Ansprüche 1 bis 13, durchgeführt bei einer anfänglichen Temperatur (T_{SOR}), welche im Wesentlichen einer Gesamtumwandlung des erneuerbaren Ausgangsmaterials entspricht, von zwischen 200°C und 400°C und vorzugsweise zwischen 230°C und 350°C.

15. Verfahren gemäß einem der Ansprüche 1 bis 14, durchgeführt bei einem Druck von zwischen 1 und 15 MPa, vorzugsweise zwischen 2 und 10 MPa.

16. Verfahren gemäß einem der Ansprüche 1 bis 15, wobei das Verhältnis zwischen Wasserstoff und dem Ausgangsmaterial aus erneuerbaren Quellen zwischen 100 und 1000 NL (H₂)/L (Ausgangsmaterial), vorzugsweise zwischen 250 und 750 NL (H₂)/L (Ausgangsmaterial), mehr bevorzugt zwischen 300 und 500 NL (H₂)/L (Ausgangsmaterial) beträgt.

17. Verfahren gemäß einem der Ansprüche 1 bis 16, durchgeführt in einem oder mehreren Festbettreaktoren, welcher bzw. welche bei einer gewichtsstündlichen Raumgeschwindigkeit des Katalysators (WHSV) von zwischen 0,5 und 5 h⁻¹, noch mehr bevorzugt zwischen 0,8 und 2,5 h⁻¹, betrieben wird bzw. werden.

18. Verfahren gemäß einem der Ansprüche 1 bis 17, wobei das Gemisch von linearen oder im Wesentlichen linearen Paraffinen eine weitere Stufe katalytischer Hydroisomerisierung mit Wasserstoff in der Gegenwart eines katalytischen Materials durchläuft, um mindestens einen Teil der linearen oder im Wesentlichen linearen Paraffine in verzweigte Paraffine umzuwandeln.

19. Verfahren gemäß Anspruch 5, wobei das Mischoxid der Formel (I) eine molare Zusammensetzung von Ni₁:Mo_{0,5}:W_{0,5}:Al1:O_{6,5} aufweist und eine amorphe Phase und eine pseudokristalline Phase isostrukturell mit Wolframit umfaßt.

## Revendications

1. Procédé de désoxygénation d'une matière première provenant de sources renouvelables contenant un mélange d'esters d'acide gras et/ou d'acides gras libres d'origine biologique par hydrotraitement, qui comprend la réaction de ladite matière première dans au moins une zone de réaction avec de l'hydrogène en présence d'un matériau catalytique en vrac dont la phase active comprend au moins un oxyde mixte de Ni, Mo, W, Al, éventuellement au moins un métal Me choisi dans le groupe comprenant Zn, Cd, Mn, Cu et un mélange de ceux-ci, pour donner un produit de réaction comprenant une fraction liquide et une fraction gazeuse, dans lequel la fraction liquide comprend un mélange de paraffines linéaires ou substantiellement linéaires ; et dans lequel ledit procédé a une sélectivité élevée vis-à-vis du mécanisme de décarbonylation/décarboxylation des acides gras libres et/ou de leurs esters par rapport au mécanisme d'hydrodésoxygénation avec la formation d'eau.

2. Procédé selon la revendication 1, dans lequel la quantité totale des métaux (Ni + Mo + W), calculée en oxydes, dans ledit oxyde mixte de la phase active dudit matériau catalytique est comprise entre 40 % et 98 % en poids par rapport au poids total de la phase active elle-même, et est de préférence comprise entre 42 % et 85 % en poids.

3. Procédé selon la revendication 1 ou 2, dans lequel la quantité totale des métaux (Ni + W), calculée en oxydes, dans ledit oxyde mixte de la phase active dudit matériau catalytique est comprise entre 28 % et 84 % en poids par rapport au poids total de la phase active elle-même, et est de préférence comprise entre 30 % et 64 % en poids.

4. Procédé selon l'une quelconque des revendications 1 à 3, dans lequel le rapport molaire entre Mo et W dans l'oxyde mixte de la phase active dudit matériau catalytique est compris entre 0,90 et 1,10 et est de préférence compris entre 0,95 et 1,05.

5. Procédé selon l'une quelconque des revendications 1 à 4, dans lequel la phase active dudit matériau catalytique comprend au moins un oxyde mixte ayant la formule (1) suivante :
MeₐNi_{b}Mo_{c}W_{d}AlₑO_{f}·pC (I),
où :
- Me est choisi dans le groupe comprenant Zn, Cd, Mn, Cu et un mélange de ceux-ci,
- C est un composant organique, ou un résidu obtenu par calcination partielle dudit composant organique, résultant d'un composé organique polymère choisi dans le groupe comprenant l'alginate d'ammonium, la méthylcellulose, la propylméthylcellulose, des copolymères d'éthylène glycol et de propylène glycol, l'éthoxylate d'octylphénol, l'éther cétylique de polyoxyéthylène,
- a peut être supérieur ou égal à 0,
- b, c, d, e et f sont supérieurs à 0, et de préférence supérieurs à 0,1,
- f est égal à (2a+2b+6c+6d+3e)/2,
- le rapport (a + b)/(c + d) peut être compris entre 0,9 et 1,1,
- le rapport a/b peut être supérieur ou égal à 0 et inférieur ou égal à 1,5, et est de préférence compris entre 0,1 et 0,4,
- le rapport c/d peut être compris entre 0,2 et 5, et est de préférence compris entre 1 et 2,5,
- le rapport (a+b+c+d)/e peut être compris entre 0,6 et 5, et
- p est le pourcentage en poids de C par rapport au poids total de l'oxyde mixte de formule (I), et peut être supérieur à 0 % et inférieur ou égal à 40 %.

6. Procédé selon l'une quelconque des revendications 1 à 5, dans lequel ledit oxyde mixte comprend une phase amorphe et une phase pseudo-cristalline isostructurale avec la wolframite.

7. Procédé selon l'une quelconque des revendications 1 à 6, dans lequel au moins un liant inorganique est ajouté à la phase active du matériau de catalyseur.

8. Procédé selon la revendication 7, dans lequel ledit au moins un liant inorganique est présent en une quantité comprise entre 0,1 % et 50 % en poids, de préférence entre 10 % et 50 % en poids, de préférence encore entre 30 % et 50 % en poids, par rapport au poids total dudit matériau catalytique.

9. Procédé selon l'une quelconque des revendications 1 à 8, dans lequel la quantité totale des métaux (Ni + Mo + W), calculée en oxydes, dans ledit oxyde mixte de la phase active dudit matériau catalytique est comprise entre 40 % et 85 % en poids par rapport au poids total du matériau catalytique lui-même, et est de préférence comprise entre 42 % et 82 % en poids du matériau catalytique.

10. Procédé selon l'une quelconque des revendications 1 à 9, dans lequel la quantité totale des métaux (Ni + W), calculée en oxydes, dans ledit oxyde mixte de la phase active dudit matériau catalytique est comprise entre 28 % et 64 % en poids par rapport au poids total de la phase active elle-même, et est de préférence comprise entre 30 % et 61 % en poids.

11. Procédé selon l'une quelconque des revendications 1 à 10, dans lequel ledit matériau catalytique est sous forme sulfurée.

12. Procédé selon l'une quelconque des revendications 1 à 11, dans lequel le pourcentage de conversion des molécules desdits esters d'acide gras et/ou acides gras libres d'origine biologique en paraffines linéaires ou substantiellement linéaires effectuée par décarbonylation/décarboxylation desdites molécules est supérieur à 60 % et de préférence compris entre 60 % et 90 %, de préférence encore entre 60 % et 85 %, de préférence encore même entre 60 % et 80 %.

13. Procédé selon l'une quelconque des revendications 1 à 12, dans lequel ladite matière première provenant de sources renouvelables est introduite dans la zone de réaction à une concentration comprise entre 30 % et 70 % en poids et de préférence entre 34 % et 60 % en poids par rapport au poids de la matière première totale, diluée avec un hydrocarbure ou un mélange d'hydrocarbures et/ou avec une partie recyclée de l'effluent de réaction.

14. Procédé selon l'une quelconque des revendications 1 à 13, réalisé à une température initiale (T_{SOR}), qui correspond à une conversion substantiellement totale de la matière première renouvelable, comprise entre 200 °C et 400 °C et de préférence entre 230 °C et 350 °C.

15. Procédé selon l'une quelconque des revendications 1 à 14, réalisé à une pression comprise entre 1 et 15 MPa, de préférence entre 2 et 10 MPa.

16. Procédé selon l'une quelconque des revendications 1 à 15, dans lequel le rapport entre l'hydrogène et la matière première provenant de sources renouvelables est compris entre 100 et 1000 NL (H₂)/L (matière première), de préférence entre 250 et 750 NL (H₂)/L (matière première), de préférence encore entre 300 et 500 NL (H₂)/L (matière première).

17. Procédé selon l'une quelconque des revendications 1 à 16, réalisé dans un ou plusieurs réacteurs à lit fixe, que l'on fait fonctionner à une vitesse spatiale horaire en poids de catalyseur (WHSV) comprise entre 0,5 et 5 h⁻¹, de préférence encore même entre 0,8 et 2,5 h⁻¹.

18. Procédé selon l'une quelconque des revendications 1 à 17, dans lequel ledit mélange de paraffines linéaires ou substantiellement linéaires subit une étape supplémentaire d'hydro-isomérisation catalytique avec de l'hydrogène en présence d'un matériau catalytique, pour convertir au moins une partie desdites paraffines linéaires ou substantiellement linéaires en paraffines ramifiées.

19. Procédé selon la revendication 5, dans lequel ledit oxyde mixte de formule (I) a une composition molaire de Ni₁:Mo_{0,5}:W_{0,5}:Al1:O_{6,5} et comprend une phase amorphe et une phase pseudo-cristalline isostructurale avec la wolframite.
